# EUROPEAN PATENT APPLICATION

(11) **EP 2 034 602 A1**
(43) Date of publication of application: **11.03.2009**
(21) Application number: 06780666.1
(22) Date of filing: 23.06.2006
(51) Int. Cl.: H02M 7/48, H02M 1/00

(54) **POWER CONVERTER**

(71) Applicant: Mitsubishi Electric Corporation, Chiyoda-ku Tokyo 100-8310 (JP)
(72) Inventor: TANAKA, Takeshi c/o Mitsubishi Electric Corporation, Tokyo 100-8310 (JP)
(74) Representative: Popp, Eugen
(86) International application number: PCT/JP2006/312629
(87) International publication number: WO 2008/001413

(57) **Abstract**

In a power converter for a vehicle where a series circuit of switching semiconductor elements (1, 2) is connected between the positive and negative terminals of a DC power supply, an AC output terminal is led out from the series joint of the series circuit, all switching semiconductor elements are arranged on the same plane of a cooler (11) with the series circuit used as one phase of the power converter, the cooling section of the cooler is constituted of a plurality of fins, and the switching semiconductor elements are cooled by refrigerant flowing between fins, the switching semiconductor elements are arranged on the cooler such that the longitudinal direction thereof become perpendicular to the flowing direction of refrigerant. A small power converter having a high cooling efficiency can be obtained at a low cost.

## Description

### TECHNICAL FIELD

This invention relates to power converters for the vehicles of a railway, etc. More particularly, it relates to a power converter in which semiconductor elements forming the respective phase arms of the power converter are arranged on the same plane of a cooler, so as to heighten the cooling efficiencies of the semiconductor elements and to reduce the wiring inductances thereof.

### BACKGROUND ART

As a prior-art power converter for a vehicle, there has been one wherein, as indicated in JP-A-2001-238468 (termed "Patent Document 1") by way of example, a plurality of semiconductor units unitized for respective phases are attached to one heat block by attachment screws so as to extend in the traveling direction of the electric car, thereby to attain the enhancement of a cooling efficiency and the reduction of a circuit inductance.
Besides, as an apparatus which has attained the reductions of inductances in the main circuit wiring lines of a power converter, the enhancement of the reliability of insulation, and the enhancement of a handling property, there is one indicated in JP-A-2001-86731 (termed "Patent Document 2").

Such vehicular power converters indicated in Patent Documents 1 and 2 have a configuration wherein IGBT modules forming the positive-side arms and negative-side arms of the power converter are arranged on a cooler so that the shorter side of the IGBT modules may become perpendicular to the traveling direction of the vehicle, and wherein a wind is blown to the heat radiation section of the cooler by the travel and movement of the vehicle, and the wind impinges against the heat radiation section as a cooling wind, so that the cooler is cooled.

Patent Document 1: JP-A-2001-238468 (FIG. 1)
Patent Document 2: JP-A-2001-86731 (FIG. 1)

### DISCLOSURE OF THE INVENTION

### PROBLEMS THAT THE INVENTION IS TO SOLVE

In such prior-art power converters, however, the shorter side of the IGBT modules forming the positive-side and negative-side arms are located in a relationship perpendicular to the flow of the cooling wind (that is, the traveling direction of the vehicle), so that a length from the windward to the leeward is large with respect to the cooling wind, and the temperature difference between the IGBT module at the windward and the IGBT module at the leeward becomes large. Besides, since that area of each IGBT module which is struck by the cooling wind is small, the efficiency of cooling is inferior. Therefore, the wind generated by the travel of the vehicle cannot be effectively used as the cooling wind. In order to sufficiently cool the IGBT module at the leeward, a cooling performance must be set high, and a cooler of large heat radiation section or high efficiency is necessitated. This has led to the problems that enlargement in the size of the apparatus is incurred, and that rise in the cost of the apparatus is incurred.

This invention has been made in order to solve such problems of the prior-art apparatuses, and it has for its object to provide a power converter in which the areas of semiconductor element modules forming positive-side arms and negative-side arms as receive a cooling wind are ensured to be large, the temperature difference between the semiconductor element modules on a windward side and on a leeward side can be made small, and the heat radiation section of a cooler can be made small, whereby the smaller size and lower cost of the apparatus have been permitted.

Besides, this invention has for its object to provide a power converter in which the inductances of circuits are decreased by wiring structures suitable for the layout states of semiconductor element modules, whereby the smaller size and lower cost of the apparatus have been permitted.

### MEANS FOR SOLVING THE PROBLEMS

A power converter according to this invention consists in a power converter for a vehicle, wherein a series circuit of a positive-side semiconductor switching arm and a negative-side semiconductor switching arm which are formed of switching semiconductor elements is connected between a positive potential side and a negative potential side of a DC voltage supply; an output terminal is led out from a series joint of the two sets of semiconductor switching arms; an anode of the positive-side semiconductor switching arm is connected to the positive potential side of the DC voltage supply, while a cathode of the negative-side semiconductor switching arm is connected to the negative potential side of the DC voltage supply; the series circuit of the two sets of semiconductor switching arms is used as one phase component of the power converter; all the switching semiconductor elements which form the semiconductor switching arms are arranged on the same plane of a cooler; and a cooling section of the cooler is configured of a plurality of fins so that the switching semiconductor elements may be cooled by a refrigerant which flows between the fins; the switching semiconductor elements being disposed on the same plane of the cooler so that longitudinal directions of the semiconductor switching arms may become perpendicular to a flowing direction of the refrigerant.

Besides, in the power converter configured as stated above, a wiring line which connects the anode of the switching semiconductor element forming one (the positive-side) semiconductor switching arm and the positive potential side of the DC voltage supply employs one first flat conductor which is common to all phases constituting the power converter; a wiring line which connects the cathode of the switching semiconductor element forming the other (the negative-side) semiconductor switching arm and the negative potential side of the DC voltage supply employs one second flat conductor which is common to all the phases constituting the power converter; a third flat conductor for each of the phases is employed as a wiring line which connects a cathode of said one (positive-side) switching semiconductor element forming the series circuit and an anode of the other (negative-side) switching semiconductor element; the first - third flat conductors are made stacked parallel flat plates; and the third flat conductor is arranged so as to be connected to the output terminal with the cathode side striding over the anode of said one (positive-side) switching semiconductor element as is connected with the output terminal and with the anode side striding over the cathode of the other (negative-side) switching semiconductor element connected with the output terminal.

### ADVANTAGES OF THE INVENTION

In accordance with the power converter of this invention, the heat radiation section of a cooler can be made small in size, and the price of the cooler can be suppressed low.
Moreover, since the inductances of circuits can be lowered, a snubber circuit is dispensed with, the number of components can be decreased, the reliability of the apparatus can be heightened, the size of the apparatus can be reduced, and the price of the apparatus can be suppressed low owing to the decreased number of components.

### BRIEF DESCRIPTION OF THE DRAWINGS

[FIG. 1] It is a schematic circuit configuration diagram of a power converter in Embodiment 1 of this invention.
[FIG. 2] It is an explanatory diagram showing the layout configuration of switching semiconductor elements on a cooler in Embodiment 1 of this invention.
[FIG. 3] It is a schematic circuit configuration diagram of a power converter in Embodiment 2 of this invention.
[FIG. 4] It is an explanatory diagram showing the layout configuration of semiconductor elements on a cooler in Embodiment 2 of this invention.
[FIG. 5] It is a schematic circuit configuration diagram of a power converter in Embodiment 3 of this invention.
[FIG. 6] It is an explanatory diagram showing the layout configuration of semiconductor elements on a cooler in Embodiment 3 of this invention.
[FIG. 7] It is a diagram showing a modification to the cooler in the power converter in Embodiment 1 of this invention.
[FIG. 8] It shows an arrayal diagram of the semiconductor elements of positive-side and negative-side arms and a diagram of wiring circuits based on flat semiconductors, in a power converter in Embodiment 4 of this invention.
[FIG. 9] It is a diagram of the wiring structures of the flat conductors which connect the positive-side semiconductor elements and the negative-side semiconductor elements, in the power converter in Embodiment 4 of this invention.
[FIG.10] It is a diagram of the wiring structure between the positive-side semiconductor elements and the positive potential side of a power supply, in the power converter in Embodiment 4 of this invention.
[FIG. 11] It is a diagram of the wiring structure between the negative-side semiconductor elements and the negative potential side of the power supply, in the power converter in Embodiment 4 of this invention.
[FIG. 12] It is a diagram showing the stacked structure of the flat conductors in the power converter in Embodiment 4 of this invention.
[FIG. 13] It is a diagram for explaining the relationship between current paths and wiring inductances in the power converter in Embodiment 4 of this invention.
[FIG. 14] It is an explanatory diagram of wiring paths and wiring inductances in a prior-art apparatus.
[FIG. 15] It is an explanatory diagram of wiring paths and wiring inductances in the power converter in Embodiment 4 of this invention.
[FIG. 16] It is a wiring structure diagram and a wiring circuit diagram of flat conductors which connect the positive-side semiconductor elements and negative-side semiconductor elements in the power converter in Embodiment 5 of this invention.
[FIG. 17] It is a wiring structure diagram and a wiring circuit diagram of flat conductors which connect the positive-side semiconductor elements and negative-side semiconductor elements in the power converter in Embodiment 6 of this invention.

### DESCRIPTION OF REFERENCE NUMERALS AND SIGNS

Numerals 1, 2, 3, 4, 5 and 6 designate IGBT modules; numerals 7, 8 and 9 designate AC output terminals; numeral 10 designates a DC voltage supply; sign P designates the anode terminal of the DC voltage supply; sign N designates the cathode terminal of the DC voltage supply; numerals 11, 15, 19 and 20 designate coolers; numeral 12 designates an IGBT module; numeral 13 designates a diode module; numerals 14 and 18 designate AC output terminals; numerals 21, 22 and 23 designate third flat conductors; numeral 24 designates a first flat conductor; numeral 25 designates a second flat conductor; numerals 26 and 27 designate third flat conductors; numeral 28 designates a first flat conductor; numeral 29 designates a second flat conductor; sign C designates the collector terminal of an IGBT module; sign E designates the emitter terminal of the IGBT module; sign A designates the anode terminal of a diode module; sign K designates the cathode terminal of the diode module; and sign AC designates an AC output terminal.

### BEST MODE FOR CARRYING OUT THE INVENTION

### EMBODIMENT 1:

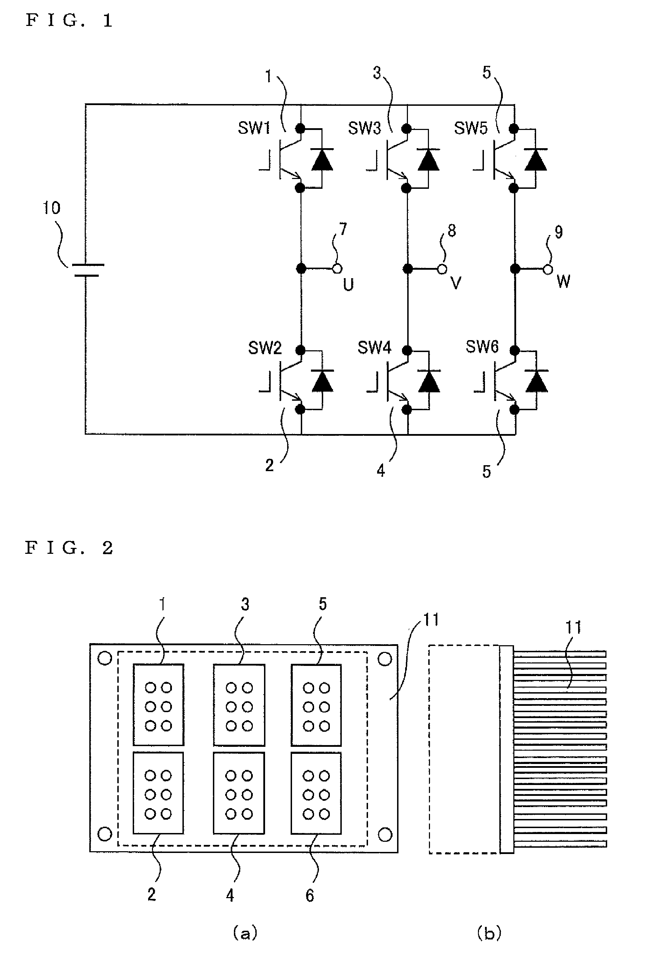

A power converter in Embodiment 1 of this invention will be described with reference to FIGS. 1 and 2.
FIG. 1 is a principal circuit configuration diagram of the three-phase power converter. Referring to the figure, numerals 1 - 6 designate semiconductor switching element modules (hereinbelow, also simply termed "switching semiconductor elements"), for example, IGBT modules, among which the IGBT modules 1, 3 and 5 form the positive-side semiconductor switching arms of the power converter, and the IGBT modules 2, 4 and 6 form the negative-side semiconductor switching arms thereof.
More specifically, the respective collector terminals C of the IGBTs 1, 3 and 5 are connected to the anode terminal P of a DC power supply (also termed "filter capacitor") 10, the respective emitter terminals E of the IGBT modules 2, 4 and 6 are connected to the cathode terminal N of the DC power supply 10, the emitter terminal E of the IGBT 1 and the collector terminal C of the IGBT 2 are connected in series, and an AC output terminal 7 is led out from the series joint of the series connection.
Likewise, the emitter terminal E of the IGBT 3 and the collector terminal C of the IGBT 4 are connected in series, while the emitter terminal E of the IGBT 5 and the collector terminal C of the IGBT 6 are connected in series, and AC output terminals 8 and 9 are led out from the respective series joints of the series connections.
By the way, in a power converter of large capacity as for use in a railway vehicle, usually three IGBTs, for example, are connected in parallel within one switching semiconductor element (IGBT module), and one switching semiconductor element (IGBT module) has three sets of collector terminals and emitter terminals.

FIG. 2 is a layout configuration diagram showing a state
where the IGBT modules 1 - 6 in FIG. 1 are disposed on the same plane of a cooler 11. FIG. 2 (a) is a view of the power converter seen from the IGBT module mounting surface, while FIG. 2 (b) is a view seen from the side surface of the cooler.
As shown in FIG. 2, in the power converter of Embodiment 1, in the case where all the IGBT modules 1 - 6 constituting the positive-side and negative-side semiconductor switching arms are disposed on the same plane of the cooler 11, the IGBT modules 1 - 6 are arranged so that their longer latus sides may become perpendicular to the direction X of a cooling wind (that is, the traveling direction of a vehicles).

In accordance with the power converter of Embodiment 1 as has such a layout configuration, the longer latus sides of the IGBT modules 1 - 6 are located perpendicularly to the direction (arrow X) of the cooling wind, -so that the area of each of the IGBT modules 1 - 6 as receives the cooling wind can be enlarged. In addition, since the direction from the windward to the leeward is on the shorter latus sides of the IGBT modules, a distance from the windward to the leeward can be shortened, and the difference between the temperatures of the IGBT modules on a windward side and a leeward side can be made small, whereby it is permitted to efficiently cool the IGBT modules. Accordingly, the heat radiation section of the cooler 11 can be made small, reduction in the size of the cooler can be realized, and the lowering of a cost is permitted in correspondence with the smaller size of the cooler.

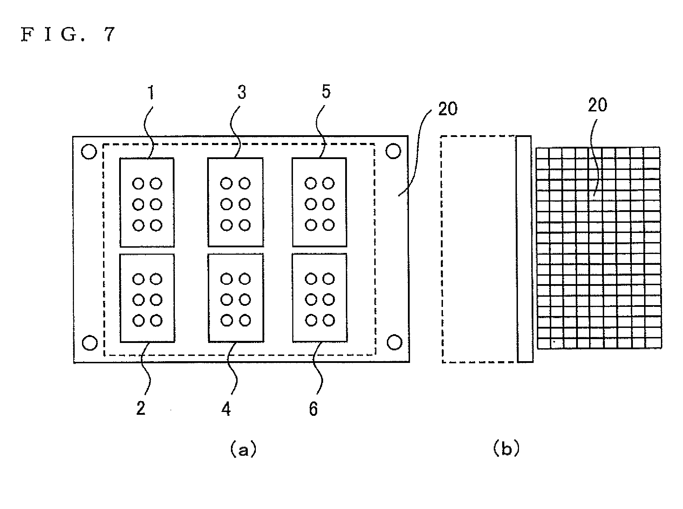

Incidentally, FIG. 7 shows the layout configuration of the IGBT modules 1 - 6 in the case where a cooler 20 of heatsink type employing fins of grid type is used as the cooler. It is needless to say that, even when such a cooler 20 is used, the same advantages as stated above are achieved. That is, the cooler may be any one which has a plurality of fins and in which the longer latus sides of IGBT modules are located perpendicularly to the direction of a cooling wind.

### EMBODIMENT 2:

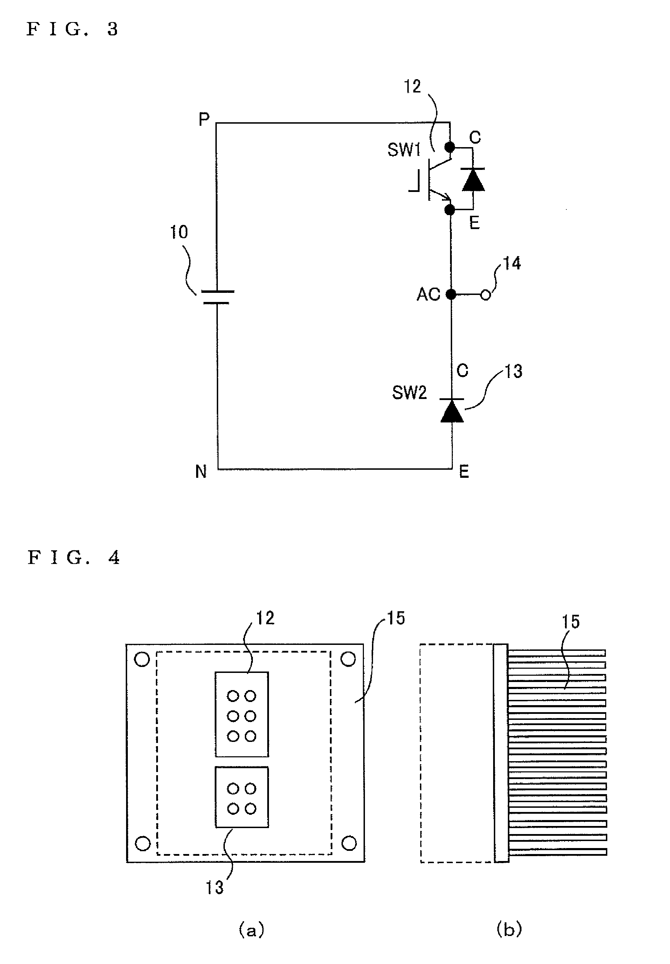

FIGS. 3 and 4 show a power converter in Embodiment 2 of this invention. FIG. 3 is a principal circuit configuration diagram of the power converter, and FIG. 4 is a layout configuration diagram showing a state where semiconductor element modules in FIG. 3 are disposed on a cooler. FIG. 4 (a) is a view of the power converter seen from a semiconductor element module mounting surface, while FIG. 4 (b) is a view seen from the side surface of the cooler.
Referring to FIGS. 3 and 4, numeral 12 designates the same IGBT module as in Embodiment 1. The IGBT module forms the positive-side semiconductor switching arm of the power converter, and its collector terminal C is connected to the anode terminal P of a DC power supply 10. Numeral 13 designates a diode module (also termed "rectifying semiconductor element"). The diode module forms the negative-side semiconductor rectification arm of the power converter, and its anode terminal A is connected to the cathode terminal N of the DC power supply 10. The emitter terminal E of the IGBT module 12 and the cathode terminal K of the diode module 13 are connected in series, and an output terminal 14 is led out from the series joint of the series connection.

As shown in FIG. 4, the IGBT module 12 and the diode module 13 are arranged on the same plane of the cooler 15 so that their longer latus sides may become perpendicular to the direction of a cooling wind (that is, the traveling direction of a vehicle).
That is, the point of difference of Embodiment 2 from Embodiment 1 is only the principal circuit configuration of the power converter, and even with the principal circuit configuration of such Embodiment 2, the same advantages as in Embodiment 1 can be obtained by arranging the IGBT module 12 and the diode module 13 on the same plane of the cooler 15 so that the longer latus sides thereof may become perpendicular to the direction of the cooling wind.

More specifically, the longer latus side of the IGBT module 12 and the longer latus side of the diode module 13 are located perpendicularly to the direction of the cooling wind, so that those areas of the IGBT module 12 and the diode module 13 which receive the cooling wind can be enlarged. In addition, since a direction from the windward to the leeward is on the shorter latus sides of the IGBT module and the diode module, a distance from the windward to the leeward can be shortened, and it is permitted to efficiently cool the modules. Accordingly, the heat radiation section of the cooler can be made small, reduction in the size of the cooler can be realized, and the lowering of a cost is permitted in correspondence with the smaller size of the cooler.

### EMBODIMENT 3:

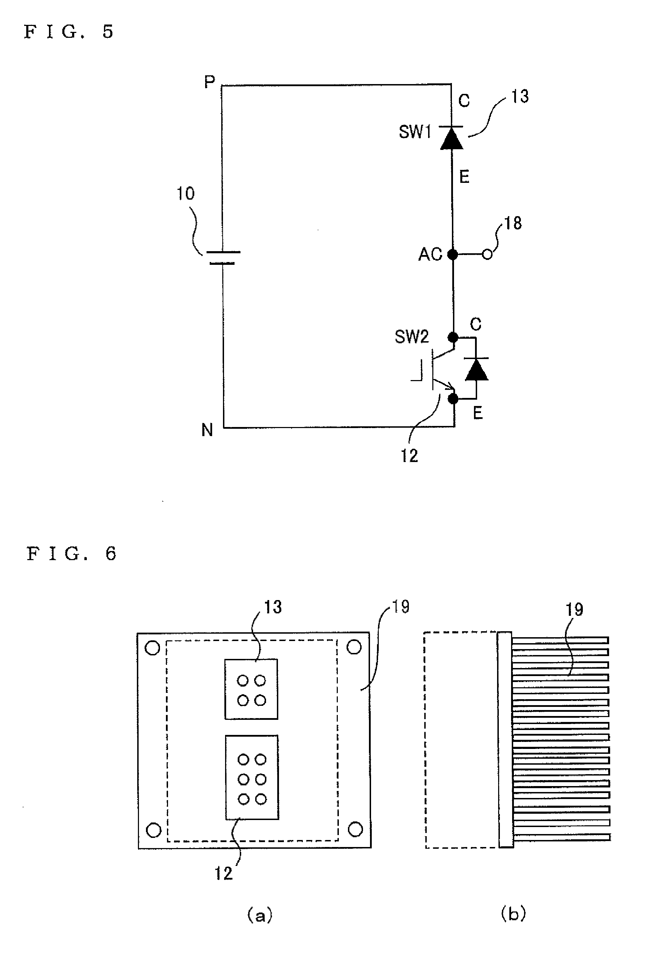

FIGS. 5 and 6 show a power converter in Embodiment 3 of this invention. FIG. 5 is a principal circuit configuration diagram of the power converter, and FIG. 6 is a layout configuration diagram showing a state where semiconductor element modules in FIG. 5 are disposed on a cooler. FIG. 6 (a) is a view of the power converter seen from a semiconductor element module mounting surface, while FIG. 6(b) is a view seen from the side surface of the cooler.
Referring to FIGS. 5 and 6, numeral 12 designates the same IGBT module as in Embodiment 2. The IGBT module forms the negative-side semiconductor switching arm of the power converter, and its emitter terminal E is connected to the cathode terminal N of a DC power supply 10. Numeral 13 designates a diode module (also termed "rectifying semiconductor element"). The diode module forms the positive-side semiconductor rectification arm of the power converter, and its cathode terminal K is connected to the anode terminal P of the DC power supply 10. The collector terminal C of the IGBT module 12 and the anode terminal A of the diode module 13 are connected in series, and an output terminal 18 is led out from the series joint AC of the series connection.

As shown in FIG. 6, the IGBT module 12 and the diode module 13 are arranged on the same plane of the cooler 19 so that their longer latus sides may become perpendicular to the direction of a cooling wind (that is, the traveling direction of a vehicle).
That is, the point of difference of Embodiment 3 from Embodiment 2 is only the fact that the connection relationship between the IGBT module 12 and the diode module 13 is a vertically opposite relationship, in other words, that the diode module 13 has become the positive-side semiconductor rectification arm, while the IGBT module 12 has become the negative-side semiconductor switching arm. Even with such Embodiment 3, quite the same advantages as in Embodiment 2 are obtained.

### EMBODIMENT 4:

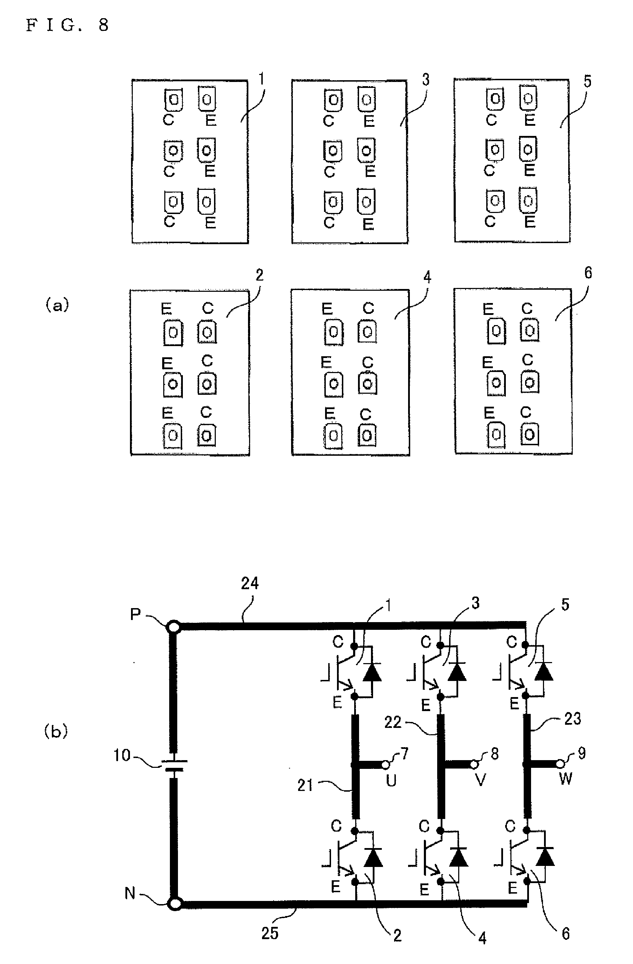

Embodiment 4 of this invention will be described with reference to FIGS. 8 - 15. Incidentally, throughout the figures, identical numerals and signs shall indicate identical or corresponding parts.
The invention of Embodiment 4 relates to wiring structures which are used in the power converter of Embodiment 1 stated above, and it has attained reduction in the wiring inductances of circuits.

FIG. 8 shows an arrayal diagram (FIG. 8(a)) of IGBT modules on a positive side and a negative side and a diagram (FIG. 8 (b)) of wiring circuits based on flat conductors, in the power converter of Embodiment 4.
Referring to FIG. 8, each of the IGBT modules 1 - 6 is an IGBT module (also termed "switching semiconductor element") which has three collector terminals C and emitter terminals E. As shown in FIG. 8(b), the IGBT modules 1, 3 and 5 form the positive-side semiconductor switching arms of the power converter, and the IGBT modules 2, 4 and 6 form the negative-side semiconductor switching arms. As will be stated later, the IGBT modules 1, 3 and 5 have the respective collector terminals C connected to the anode terminal P of a filter capacitor 10 serving as a DC voltage supply, by one first flat bus bar (also termed "first flat conductor") 24 which is common to all phases. Likewise, the emitter terminals E of the IGBT modules 2, 4 and 6 are connected to the cathode terminal N of the filter capacitor 10 by one second flat bus bar (also termed "second flat conductor") 25 which is common to all the phases.

Besides, the emitter terminal E of the IGBT module 1 and the collector terminal C of the IGBT module 2 are connected by a third flat bus bar (also termed "third flat conductor") 21, and the third flat bus bar 21 is connected to the AC output terminal 7 of the U-phase. Besides, the emitter terminal E of the IGBT module 3 and the collector terminal C of the IGBT module 4 are connected by a third flat bus bar 22, and the third flat bus bar 22 is connected to the AC output terminal 8 of the V-phase. Likewise, the emitter terminal E of the IGBT module 5 and the collector terminal C of the IGBT module 6 are connected by a third flat bus bar 23, and the third flat bus bar 23 is connected to the AC output terminal 9 of the W-phase.

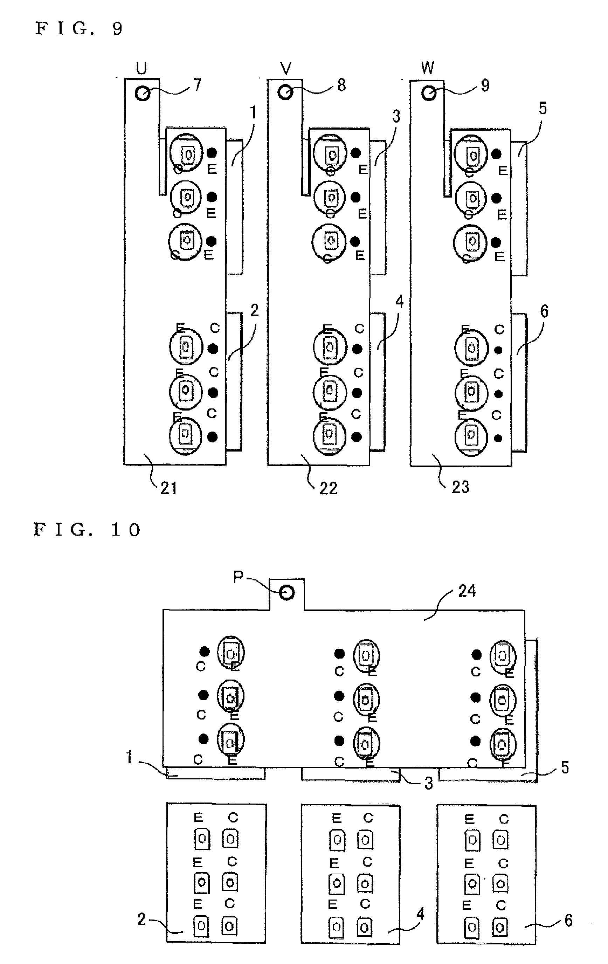

FIG. 9 is a diagram showing the structures of the above connections between the IGBT modules 1 - 6 and the third flat bus bars 21, 22 and 23. The third flat bus bar 21 has the structure in which it is connected to the three emitter terminals E of the IGBT module 1 and the three collector terminals C of the IGBT module 2, and in which it is provided with openings and formed with spaces, so as not to touch the parts of the collector terminals C of the IGBT module 1 and the emitter terminals E of the IGBT module 2.
That is, the third flat bus bar 21 is disposed so as to be connected with the output terminal 7 in a state where it connects the E terminals of the IGBT module 1 and the C terminals of the IGBT module 2, and where it strides over the C terminals of the IGBT module 1 and the E terminals of the IGBT module 2 so as not to be connected with these C terminals and E terminals.

Likewise, the third flat bus bar 22 has the structure in which it is connected to the three emitter terminals E of the IGBT module 3 and the three collector terminals C of the IGBT module 4, and in which it is provided with openings and formed with spaces, so as not to touch the parts of the collector terminals C of the IGBT module 3 and the emitter terminals E of the IGBT module 4.
That is, the third flat bus bar 22 is disposed so as to be connected with the output terminal 8 in a state where it connects the E terminals of the IGBT module 3 and the C terminals of the IGBT module 4, and where it strides over the C terminals of the IGBT module 3 and the E terminals of the IGBT module 4 so as not to be connected with these C terminals and E terminals.

Also the third flat bus bar 23 has the structure in which it is connected to the three emitter terminals E of the IGBT module 5 and the three collector terminals C of the IGBT module 6, and in which it is provided with openings and formed with spaces, so as not to touch the parts of the collector terminals C of the IGBT module 5 and the emitter terminals E of the IGBT module 6.
That is, the third flat bus bar 23 is disposed so as to be connected with the output terminal 8 in a state where it connects the E terminals of the IGBT module 5 and the C terminals of the IGBT module 6, and where it strides over the C terminals of the IGBT module 5 and the E terminals of the IGBT module 6 so as not to be connected with these C terminals and E terminals.

FIG. 10 is a wiring structure diagram of the first flat bus bar 24 which connects the anode terminal P of the filter capacitor 10 being the DC voltage supply and the respective collector terminals C of the IGBT modules 1, 3 and 5 as shown in FIG. 8(b).
As shown in FIG. 10, the first flat bus bar 24 is so configured that the respectively three collector terminals C of the IGBT modules 1, 3 and 5 are all connected in common and then to the anode terminal P of the filter capacitor 10.
Besides, the first flat bus bar 24 is put into a structure in which it is provided with openings and formed with spaces so that the respective emitter terminals E of the IGBT modules 1, 3 and 5 and this bus bar may not come into touch.

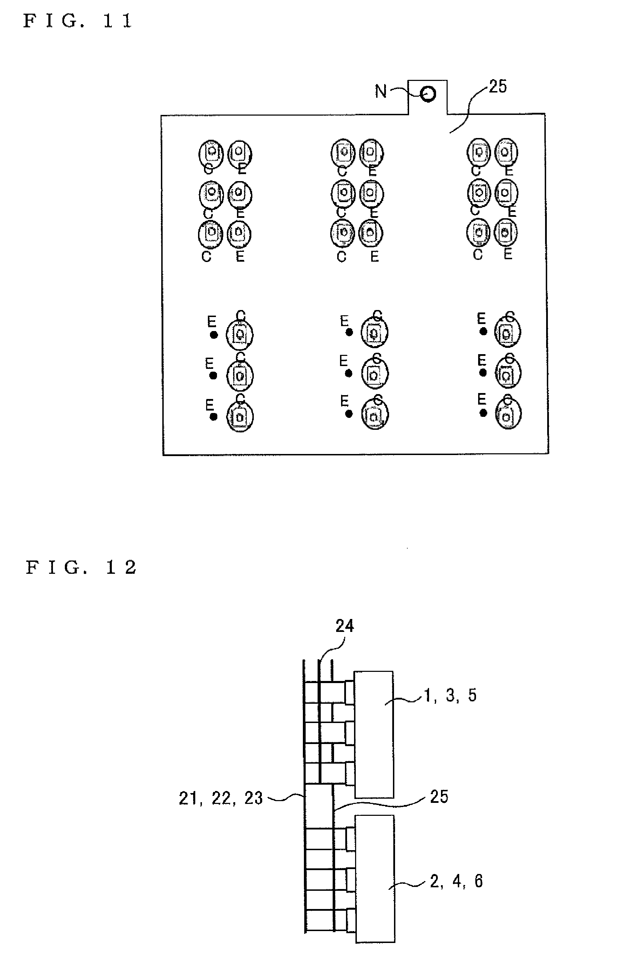

FIG. 11 is a diagram showing the wiring structure of the second flat bus bar 25 which connects the cathode terminal N of the filter capacitor 10 and the respective emitter terminals E of the IGBT modules 2, 4 and 6 as shown in FIG. 8(b). The second flat bus bar 25 is so configured that the respectively three emitter terminals E of the IGBT modules 2, 4 and 6 are all connected in common and then to the cathode terminal N of the filter capacitor 10.
Besides, the second flat bus bar 25 is put into a structure in which it is provided with openings and formed with spaces so that the respective collector terminals C of the IGBT modules 2, 4 and 6 and this bus bar may not come into touch.

Incidentally, regarding the arrangement relationship among the third flat bus bar 21 (or 22 or 23), the first flat bus bar 24 and the second flat bus bar 25 as stated above, these bus bars are disposed so as to become parallel flat plates in a stacked structure in which they are stacked one over another as shown in FIG. 12.
The first - third flat conductors are connected to the terminals of the IGBTs by, for example, screwing. In connecting the flat conductors and the terminals, a measure such as bending the flat conductor, providing a lug, or providing a collar is taken if necessary, In the vicinity of the connection parts of any flat conductor with the terminals of the IGBTs, another flat conductor is provided with the openings as stated before, so that the other flat conductor and the terminals may not be connected. Although the flat conductors have been arranged at intervals in FIG. 12, a structure in which the flat conductors are stacked with insulating members interposed therebetween may well be used. Besides, although the second flat conductor 25, the first flat conductor 24 and the third flat conductors 21 - 23 have been arranged nearer to the IGBT modules 1 - 6, the arrangement order of the flat conductors may well be changed.

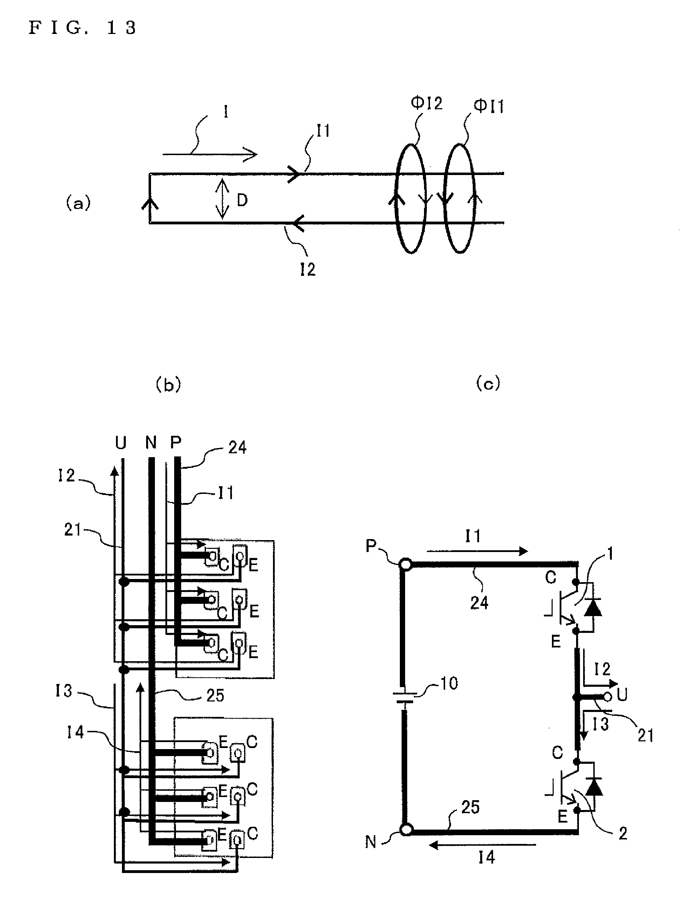

Next, the action of the reduction of the principal circuit wiring inductance featuring Embodiment 4 will be described in conjunction with FIG. 13.
The magnitude of the principal circuit wiring inductance is influenced by the length of a wiring line, and the magnitude of a magnetic field which is generated in conformity with the corkscrew rule on the basis of the flow of a current. For the purpose of making the principal circuit wiring inductance small, accordingly, it is required (1) to shorten the wiring line length, and (2) to make small the magnetic field which is generated by the flow of the current.

FIG. 13(a) illustrates the relationship between the directions of currents and generated magnetic fields.
Referring to FIG. 13 (a) , in a case where a current I1 and a current I2 are located so as to go and return, in a loop through which a current I flows, the direction of a magnetic field ΦI1 generated by the current I1 and the direction of a magnetic field ΦI2 generated by the current I2 fall into the opposite relationship. Accordingly, an inductance decreases by canceling the magnetic fields each other.

FIG. 13 (c) is a diagram for explaining the current paths of, for example, the U-phase. A current which is outputted from the anode terminal P of the filter capacitor 10, flows via the P terminal → the first flat bus bar 24 → a current I1 → the C terminal of the positive-side arm IGBT module 1 → the E terminal thereof → the third flat bus bar 21 → a current I2 → the U terminal. Besides, a current which returns from the U terminal flows via the U terminal → the third flat bus bar 21 → a current I3 → the C terminal of the IGBT module 2 of the negative-side arm → the E terminal thereof → a current I4 → the second flat bus bar 25 → the cathode terminal N of the filter capacitor 10.

FIG. 13 (b) illustrates the states of the connection paths of the flat bus bars 21, 24 and 25 shown in FIGS. 9 - 11, and shows the current paths of the above currents I1, I2, I3 and I4.
As seen from FIG. 13(b), the currents I1 and I2 and the currents I3 and I4 flow so as to go and return, respectively. That is, the currents to flow can be caused to go and return, by configuring the flat bus bars as shown in FIGS. 9 - 11, whereby the inductances of the wiring lines can be reduced as explained in conjunction with FIG. 13(a).

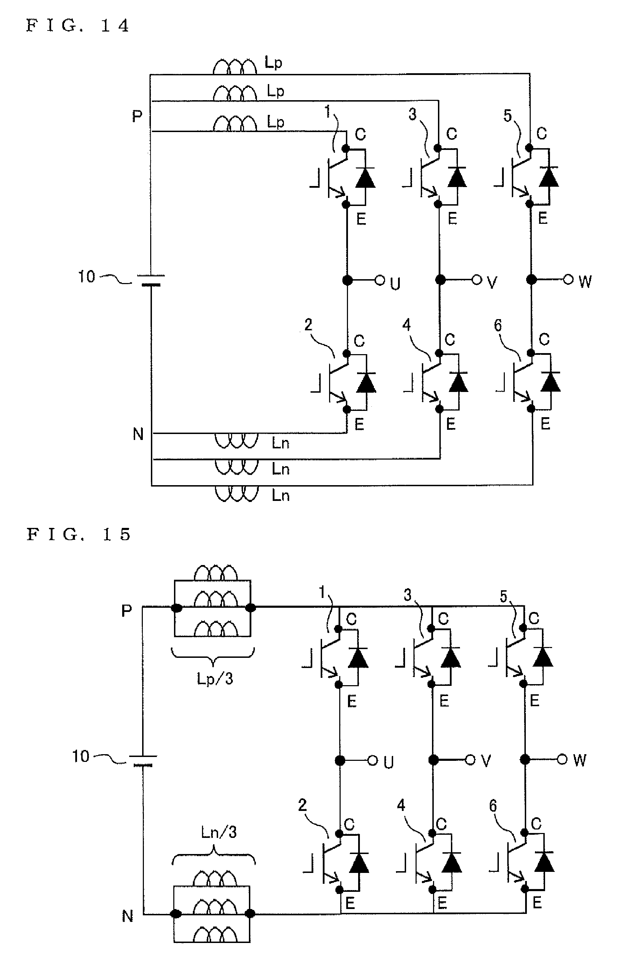

Further, the comparisons of wiring inductances between the power converter in Embodiment 4 of this invention and a prior-art apparatus will be described with reference to FIGS. 14 and 15.
FIG. 14 illustrates wiring paths and the inductances of wiring lines in the prior-art apparatus. The prior-art apparatus is so configured that a filter capacitor 10 and a U-phase, the filter capacitor 10 and a V-phase, and the filter capacitor 10 and a W-phase are respectively connected in a manner to be divided for the individual phases. Therefore, inductances Lp exist in the respective wiring lines from the P (positive side) terminal of the filter capacitor 10 to the C terminal of the IGBT of a U-phase upper (positive side) arm, from the P terminal of the filter capacitor 10 to the C terminal of the IGBT of a V-phase upper arm, and from the P terminal of the filter capacitor 10 to the C terminal of the IGBT of a W-phase upper arm.
Besides, inductances Ln exist in the respective wiring lines from the N (negative side) terminal of the filter capacitor 10 to the E terminal of the IGBT of a U-phase lower (negative side) arm, from the N terminal of the filter capacitor 10 to the E terminal of the IGBT of a V-phase lower arm, and from the N terminal of the filter capacitor 10 to the E terminal of the IGBT of a W-phase lower arm.
On this occasion, a switching surge voltage which is generated at the switching of each IGBT is expressed by the relationship of (Lp + Ln) x (switching di/dt of the IGBT).

On the other hand, the state of the wiring lines in Embodiment 4 is such that, as shown in FIG. 15, the C terminals of the IGBT modules of the respective upper (positive side) arms of the U-phase, V-phase and W-phase are collectively connected from the P (positive side) terminal of the filter capacitor 10, while the E terminals of the IGBT modules of the respective lower (negative side) arms of the U-phase, V-phase and W-phase are collectively connected from the N (negative side) terminal of the filter capacitor 10. Therefore, the inductances of the wiring lines from the P terminal of the filter capacitor to the C terminals of the IGBT modules of the upper arms become a form in which the wiring inductances of the U-phase, V-phase and W-phase are connected in parallel, and these inductances become 1/3 of the inductances Lp of the prior-art example in FIG. 14. Likewise, the inductances of the wiring lines between the N-side terminal of the filter capacitor and the respective phases U, V and W become 1/3 of the inductances Ln in the prior-art example.

As stated above, in accordance with the power converter in Embodiment 4 of this invention, the inductances of the wiring lines can be made small, a snubber circuit which suppresses the switching surge voltage of the IGBT and which is usually required is dispensed with, the number of components is decreased, and not only the reduction of the size of the apparatus, but also the lowering of the cost thereof can be attained.

### EMBODIMENT 5:

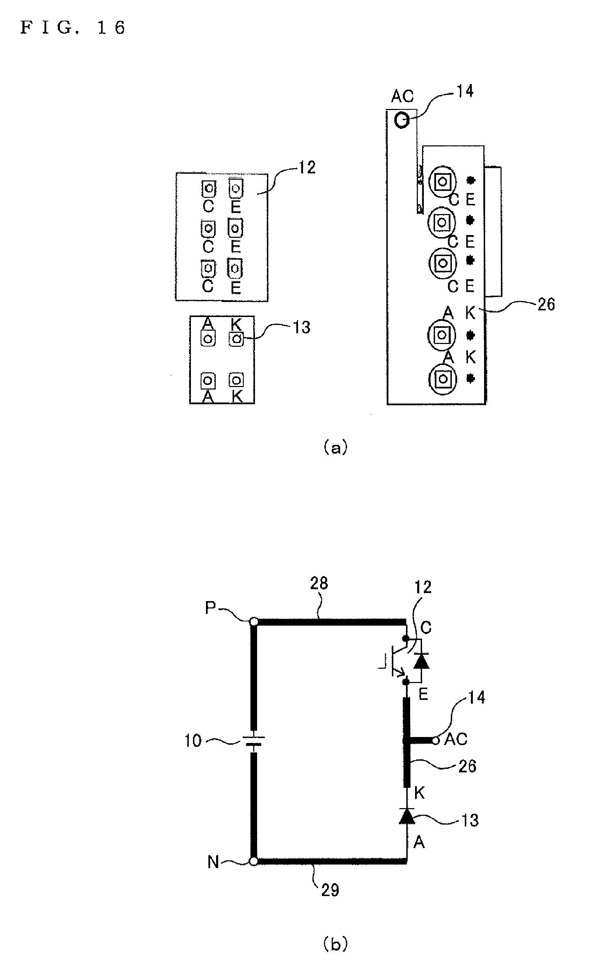

Embodiment 5 of this invention is shown in FIG. 16. The invention of Embodiment 5 relates to wiring structures which are used in the power converter of Embodiment 2 stated above, and it has attained reduction in the wiring inductances of circuits.
FIG. 16 (a) is a diagram showing the arrayals and wiring structures of the positive-side and negative-side semiconductor elements in the power converter, and FIG. 16(b) shows a diagram of a wiring circuit based on flat bus bars.
Referring to FIG. 16, numeral 12 designates the IGBT module which has three collector terminals C and emitter terminals E, which forms the positive-side semiconductor switching arm of the power converter, and the collector terminals C of which are connected to the anode terminal P of the DC power supply 10.
Numeral 13 designates the diode module (also termed "rectifying semiconductor elements") which has anode terminals A and cathode terminals K, which forms the negative-side semiconductor rectification arm of the power converter, and the anode terminals A of which are connected to the cathode terminal N of the DC power supply 10. The emitter terminals E of the IGBT module 12 and the cathode terminals K of the diode module 13 are connected in series, and the output terminal 14 is led out from the series joint of the series connection.
Incidentally, FIG. 16 shows the configuration of an output arm corresponding to one phase of the power converter, and it is needless to say that, in case of a three-phase power converter by way of example, three output arms are connected between the positive and negative terminals of the DC power supply 10.

Here, in the same manner as in Embodiment 4 stated before, the IGBT module 12 has the collector terminals C connected to the anode terminal P of the DC power supply 10 by one first flat bus bar (also termed "first flat conductor") 28, and the anode terminals A of the diode module 13 are connected to the cathode terminal N of the DC power supply 10 by one second flat bus bar (also termed "second flat conductor") 29.
Besides, the emitter terminals E of the IGBT module 12 and the cathode terminals K of the diode module 13 are connected by a third flat bus bar (also termed "third flat conductor") 26, and the third flat bus bar 26 is connected to the output terminal 14.

As shown in FIG. 16(a), the third flat bus bar 26 has a structure in which it is connected to the three emitter terminals E of the IGBT module 12 and the two cathode terminals K of the diode module 13, and in which it is provided with openings and formed with spaces so as not to touch the parts of the collector terminals C of the IGBT module 12 and the anode terminals A of the diode module 13.
In other words, the third flat bus bar 26 is disposed so as to be connected with the output terminal 14 in a state-where it connects the E terminals of the IGBT module 12 and the cathode terminals K of the diode module 13, and where it strides over the C terminals of the IGBT module 12 and the anode terminals A of the diode module 13 so as not to be connected with these C terminals and A terminals.

That is, the point of difference of Embodiment 5 from Embodiment 4 is only the fact that the principal circuit configuration of the power converter is different. Even with such a principal circuit configuration of Embodiment 5, the same advantages as in Embodiment 4 can be obtained by forming the wiring structures based on the flat conductors, similar to those in Embodiment 4, as stated above.

### EMBODIMENT 6:

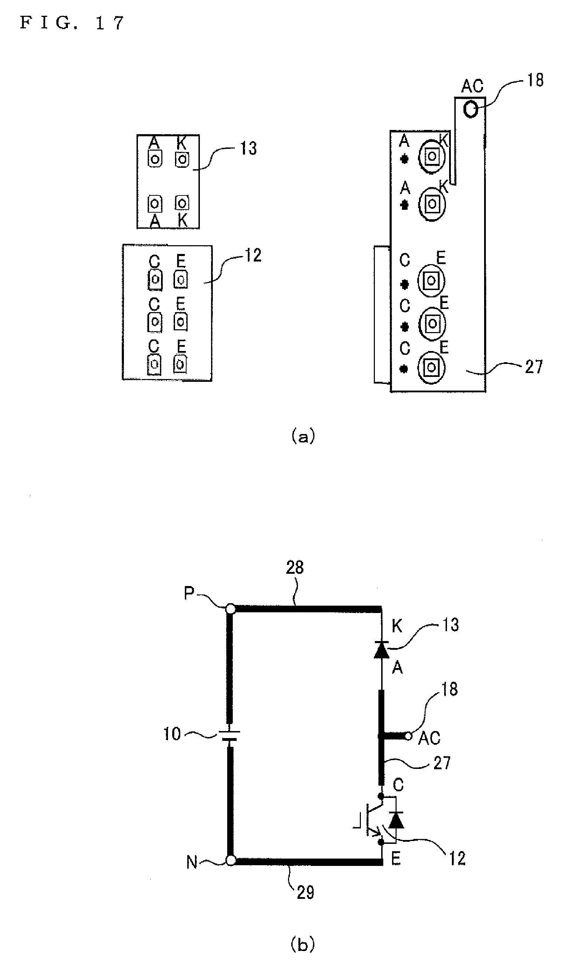

FIG. 17 shows Embodiment 6 of this invention, and FIG. 17 (a) is a diagram showing the arrayals and wiring structures of positive-side and negative-side semiconductor elements in a power converter, while FIG. 17(b) shows a diagram of a wiring circuit based on flat bus bars.
The invention of Embodiment 6 relates to the wiring structures which are used in the power converter of Embodiment 3 stated above. The point of difference of Embodiment 6 from Embodiment 5 is only the fact that the connection relationship between the IGBT module 12 and the diode module 13 is a vertically (positive and negative signs) opposite relationship, in other words, that the diode module 13 has become the positive-side semiconductor rectification arm, while the IGBT module 12 has become the negative-side semiconductor switching arm. The remaining configuration is quite the same as in Embodiment 5.

That is, the cathode terminals K of the diode module 13 are connected to the anode terminal P of the DC power supply 10 by one first flat bus bar 28, and the emitter terminals E of the IGBT module 12 are connected to the cathode terminal N of the DC power supply 10 by one second flat bus bar 29.
Besides, the anode terminals A of the diode module 13 and the collector terminals C of the IGBT module 12 is connected by a third flat bus bar 27, and the third flat bus bar 27 is connected to the output terminal 18.

As shown in FIG. 17(a), the third flat bus bar 27 has a structure in which it is connected to the two anode terminals A of the diode module 13 and the three collector terminals C of the IGBT module 12, and in which it is provided with openings and formed with spaces so as not to touch the parts of the cathode terminals K of the diode module 13 and the emitter terminals E of the IGBT module 12.

Even with such a principal circuit configuration of Embodiment 6, the same advantages as in Embodiment 4 can be obtained by forming the wiring structures based on the flat conductors, similar to those in Embodiment 4.

### INDUSTRIAL APPLICABILITY

This invention is applicable to power converters which are mounted on the vehicles of a railway, etc.

## Claims

1. A power converter for a vehicle, wherein a series circuit of a positive-side semiconductor switching arm and a negative-side semiconductor switching arm which are formed of switching semiconductor elements is connected between a positive potential side and a negative potential side of a DC voltage supply; an output terminal is led out from a series joint of the two sets of semiconductor switching arms; an anode of the positive-side semiconductor switching arm is connected to the positive potential side of the DC voltage supply, while a cathode of the negative-side semiconductor switching arm is connected to the negative potential side of the DC voltage supply; the series circuit of the two sets of semiconductor switching arms is used as one phase component of the power converter; all the switching semiconductor elements which form the semiconductor switching arms are arranged on the same plane of a cooler; and a cooling section of the cooler is configured of a plurality of fins so that the switching semiconductor elements may be cooled by a refrigerant which flows between the fins; **characterized in that** the switching semiconductor elements are disposed on the same plane of the cooler so that longitudinal directions of the semiconductor switching arms may become perpendicular to a flowing direction of the refrigerant.

2. A power converter for a vehicle, wherein a series circuit of a positive-side semiconductor switching arm which is formed of a switching semiconductor element, and a negative-side semiconductor rectification arm which is formed of a rectifying semiconductor element is connected between a positive potential side and a negative potential side of a DC voltage supply; an output terminal is led out from a series joint of the semiconductor switching arm and the semiconductor rectification arm; an anode of the semiconductor switching arm is connected to the positive potential side of the DC voltage supply, while an anode of the semiconductor rectification arm is connected to the negative potential side of the DC voltage supply; the series circuit is used as one phase component of the power converter; all the semiconductor elements which form the semiconductor switching arm and the semiconductor rectification arm are arranged on the same plane of a cooler; and a cooling section of the cooler is configured of a plurality of fins so that the semiconductor elements may be cooled by a refrigerant which flows between the fins-; **characterized in that** the semiconductor elements are disposed on the same plane of the cooler so that longitudinal directions of the semiconductor switching arm and the semiconductor rectification arm may become perpendicular to a flowing direction of the refrigerant.

3. A power converter for a vehicle, wherein a series circuit of a positive-side semiconductor rectification arm which is formed of a rectifying semiconductor element, and a negative-side semiconductor switching arm which is formed of a switching semiconductor element is connected between a positive potential side and a negative potential side of a DC voltage supply; an output terminal is led out from a series joint of the semiconductor rectification arm and the semiconductor switching arm; a cathode of the semiconductor rectification arm is connected to the positive potential side of the DC voltage supply, while a cathode of the semiconductor switching arm is connected to the negative potential side of the DC voltage supply; the series circuit is used as one phase component of the power converter; all the semiconductor elements which form the semiconductor rectification arm and the semiconductor switching arm are arranged on the same plane of a cooler; and a cooling section of the cooler is configured of a plurality of fins so that the semiconductor elements may be cooled by a refrigerant which flows between the fins; **characterized in that** the semiconductor elements are disposed on the same plane of the-cooler so that longitudinal directions of the semiconductor rectification arm and the semiconductor switching arm may become perpendicular to a flowing direction of the refrigerant.

4. A power converter as defined in claim 1, **characterized in that** a wiring line which connects the anode of the switching semiconductor element forming one (the positive-side) semiconductor switching arm and the positive potential side of the DC voltage supply employs one first flat conductor which is common to all phases constituting the power converter; that a wiring line which connects the cathode of the switching semiconductor element forming the other (the negative-side) semiconductor switching arm and the negative potential side of the DC voltage supply employs one second flat conductor which is common to all the phases constituting the power converter; that a third flat conductor for each of the phases is employed as a wiring line which connects a cathode of said one (positive-side) switching semiconductor element forming the series circuit and an anode of the other (negative-side) switching semiconductor element; that the first - third flat conductors are made stacked parallel flat plates; and that the third flat conductor is arranged so as to be connected to the output terminal with the cathode side striding over the anode of said one (positive-side) switching semiconductor element as is connected with the output terminal and with the anode side striving over the cathode of the other (negative-side) switching semiconductor element connected with the output terminal.

5. A power converter as defined in claim 2, **characterized in that** a wiring line which connects the anode of the switching semiconductor element forming one (the positive-side) semiconductor switching arm and the positive potential side of the DC voltage supply employs one first flat conductor which is common to all phases constituting the power converter; that a wiring line which connects the anode of the rectifying semiconductor element forming the other (the negative-side) semiconductor rectification arm and the negative potential side of the DC voltage supply employs one second flat conductor which is common to all the phases constituting the power converter; that a third flat conductor for each of the phases is employed as a wiring line which connects a cathode of the switching semiconductor element forming the series circuit and a cathode of the rectifying semiconductor element; that the first - third flat conductors are made stacked parallel flat plates; and that the third flat conductor is arranged so as to be connected to the output terminal with the cathode side striding over the anode of the switching semiconductor element as is connected with the output terminal and with the cathode side striding over the anode of the rectifying semiconductor element connected with the output terminal.

6. A power converter as defined in claim 3, **characterized in that** a wiring line which connects the cathode of the rectifying semiconductor element forming one (the positive-side) semiconductor rectification arm and the positive potential side of the DC voltage supply employs one first flat conductor which is common to all phases constituting the power converter; that a wiring line which connects the cathode of the switching semiconductor element forming the other (the negative-side) semiconductor switching arm and the negative potential side of the DC voltage supply employs one second flat conductor which is common to all the phases constituting the power converter; that a third flat conductor for each of the phases is employed as a wiring line which connects an anode of the rectifying semiconductor element forming the series circuit and an anode of the switching semiconductor element; that the first - third flat conductors are made stacked parallel flat plates; and that the third flat conductor is arranged so as to be connected to the output terminal with the anode side striding over the cathode of the rectifying semiconductor element as is connected with the output terminal and with the anode side striding over the cathode of the switching semiconductor element connected with the output terminal.
